# EUROPEAN PATENT APPLICATION

(11) **EP 4 817 402 A1**
(43) Date of publication of application: **07.10.2026**
(21) Application number: 26168208.2
(22) Date of filing: 26.03.2026
(51) Int. Cl.: A01G 3/053, A01G 3/04

(54) **DEBRIS COLLECTOR FOR A POWER TOOL**

(30) Priority: 27.03.2025 US 202563778586 P
(71) Applicant: Techtronic Cordless GP, Anderson, SC 29621 (US)
(72) Inventor: AMICK, Ashley Bryan Jr., Anderson SC, 29621 (US); OLVERA, Eduardo, Anderson SC, 29621 (US)
(74) Representative: Zimmermann & Partner Patentanwälte mbB

(57) **Abstract**

A debris collector for a hedge trimmer is provided. The debris collector includes a base at least partially formed of a fabric or flexible material, a collection bag coupled to the base and defining a receptacle having an opening, a wire frame at least partially disposed about the opening of the collection bag, a first clamp, and a second clamp spaced from the first clamp along a longitudinal axis. An end of the base defines a tubular channel for receiving a rod extending along the longitudinal axis. The base is pivotable about the rod. The first clamp and the second clamp define a first opening for receiving at least a portion of the rod, a second opening for receiving at least a portion of the wire frame, and an angular slot defined between a first end wall and a second end wall for receiving another portion of the wire frame.

## Description

### CROSS-REFERENCE TO RELATED APPLICATION

This application claims priority to U.S. Provisional Patent Application No. 63/778,586, filed March 27, 2025, the disclosure of which is incorporated herein by reference in its entirety.

### FIELD

The present disclosure relates generally to a debris collector for a power tool, such as a hedge trimmer.

### BACKGROUND

Power tools such as hedge trimmers are used for cutting branches, leaves, and other plant materials from plants, such as trees and shrubs. Typically, the plant material cut by the hedge trimmer falls to the ground upon cutting. Accordingly, improved hedge trimmers that collect the cut plant material such that the collected plant material may be more easily disposed of would be advantageous.

### BRIEF DESCRIPTION

Aspects and advantages of the present disclosure will be set forth in part in the following description, or may be obvious from the description, or may be learned through practice of the technology.

In accordance with one embodiment, a debris collector for a hedge trimmer is provided. The debris collector includes a base at least partially formed of a fabric material, a collection bag coupled to the base and defining a receptacle having an opening, a wire frame at least partially disposed about the opening of the collection bag, a first clamp, and a second clamp spaced from the first clamp along a longitudinal axis. An end of the base defines a tubular channel for receiving a rod extending along the longitudinal axis. The base is pivotable about the rod. The first clamp and the second clamp define a first opening for receiving at least a portion of the rod, a second opening for receiving at least a portion of the wire frame, and an angular slot defined between a first end wall and a second end wall for receiving another portion of the wire frame. The wire frame is pivotable about the second opening between the first end wall and the second end wall of the angular slot.

In accordance with another embodiment, a hedge trimmer is provided. The hedge trimmer includes a spine extending between a first end and a second end opposite the first end, a first reciprocating element coupled to the spine and extending between the first end and the second end opposite the first end, a second reciprocating element coupled to the spine and extending between the first end and the second end, a motive device for driving one or both of the first reciprocating element and the second reciprocating element, and a debris collector removably coupled to the spine. The debris collector includes a base at least partially formed of a fabric material. An end of the base defines a tubular channel for receiving a rod extending along a longitudinal axis. The base is also pivotable about the rod. The debris collector also includes a collection bag coupled to the base and defining a receptacle having an opening, a wire frame at least partially disposed about the opening of the collection bag, a first clamp, and a second clamp spaced from the first clamp along the longitudinal axis. The first clamp and the second clamp define a first opening for receiving at least a portion of the rod, a second opening for receiving at least a portion of the wire frame, and an angular slot defined between a first end wall and a second end wall for receiving another portion of the wire frame. The wire frame is pivotable about the second opening between the first end wall and the second end wall of the angular slot.

These and other features, aspects and advantages of the present disclosure will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present application, including the best mode of making and using the present systems and methods, directed to one of ordinary skill in the art, is set forth in the specification, which makes reference to the appended figures, in which:
FIG. 1 is a perspective view of a hedge trimmer and a debris collector in accordance with some embodiments of the present disclosure;
FIG. 2 is a perspective view of the debris collector of FIG. 1 in accordance with some embodiments of the present disclosure;
FIG. 3A is a plan view of a base of the debris collector of FIGS. 1-2 in accordance with some embodiments of the present disclosure;
FIG. 3B is a plan view of a base of the debris collector of FIGS. 1-2 in accordance with some embodiments of the present disclosure;
FIG. 3C is a plan view of a base of the debris collector of FIGS. 1-2 in accordance with some embodiments of the present disclosure;
FIG. 4 is a side view of a clamp of the of the debris collector of FIGS. 1-2 in accordance with some embodiments of the present disclosure;
FIG. 5 is a side view of the clamp o FIG. 4 coupled to the hedge trimmer of FIG. 1 in accordance with some embodiments of the present disclosure;
FIG. 6 is a perspective view of the claim of FIG. 4 in accordance with some embodiments of the present disclosure;
FIG. 7 is a front view of a wire frame of the debris collector of FIGS. 1-2 in a first position and a second position in accordance with some embodiments of the present disclosure; and
FIG. 8 is a method for operating the hedge trimmer and the debris collector of FIG. 1 in accordance with some embodiments of the present disclosure.

### DETAILED DESCRIPTION

Reference now will be made in detail to embodiments of the present disclosure, one or more examples of which are illustrated in the drawings. The word "exemplary" is used herein to mean "serving as an example, instance, or illustration." Any implementation described herein as "exemplary" is not necessarily to be construed as preferred or advantageous over other implementations. Moreover, each example is provided by way of explanation, rather than limitation of, the technology. In fact, it will be apparent to those skilled in the art that modifications and variations can be made in the present technology without departing from the scope or spirit of the claimed technology. For instance, features illustrated or described as part of one embodiment can be used with another embodiment to yield a still further embodiment. Thus, it is intended that the present disclosure covers such modifications and variations as come within the scope of the appended claims and their equivalents. The detailed description uses numerical and letter designations to refer to features in the drawings. Like or similar designations in the drawings and description have been used to refer to like or similar parts of the disclosure.

As used herein, the terms "first", "second", and "third" may be used interchangeably to distinguish one component from another and are not intended to signify location or importance of the individual components. The singular forms "a," "an," and "the" include plural references unless the context clearly dictates otherwise. The terms "coupled," "fixed," "attached to," and the like refer to both direct coupling, fixing, or attaching, as well as indirect coupling, fixing, or attaching through one or more intermediate components or features, unless otherwise specified herein. As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive- or and not to an exclusive- or. For example, a condition A or B is satisfied by any one of the following: A is true (or present) and B is false (or not present), A is false (or not present) and B is true (or present), and both A and B are true (or present).

Terms of approximation, such as "about," "generally," "approximately," or "substantially," include values within ten percent greater or less than the stated value. When used in the context of an angle or direction, such terms include within ten degrees greater or less than the stated angle or direction. For example, "generally vertical" includes directions within ten degrees of vertical in any direction, e.g., clockwise or counter-clockwise.

Benefits, other advantages, and solutions to problems are described below with regard to specific embodiments. However, the benefits, advantages, solutions to problems, and any feature(s) that may cause any benefit, advantage, or solution to occur or become more pronounced are not to be construed as a critical, required, or essential feature of any or all the claims.

In general, hedge trimmers are used for cutting branches, leaves, and other plant materials from plants, such as trees and shrubs. Typically, the plant material cut by the hedge trimmer falls to the ground (or gets caught in a plant) upon cutting. Accordingly, a debris collector removably couplable to the hedge trimmer for collecting the cut plant material such that the collected plant material may be more easily disposed of is desirable.

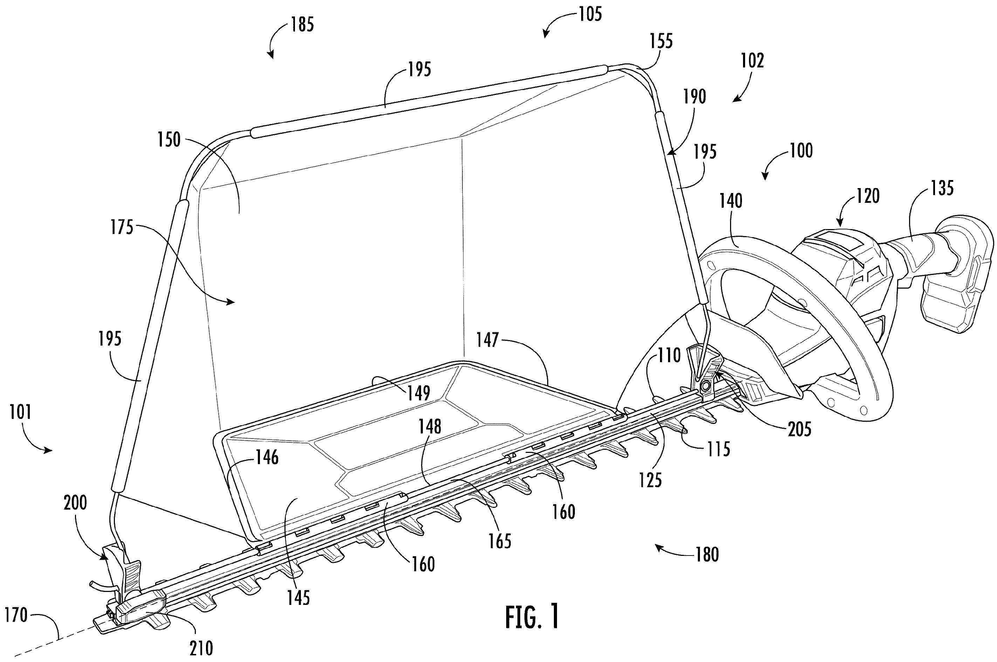

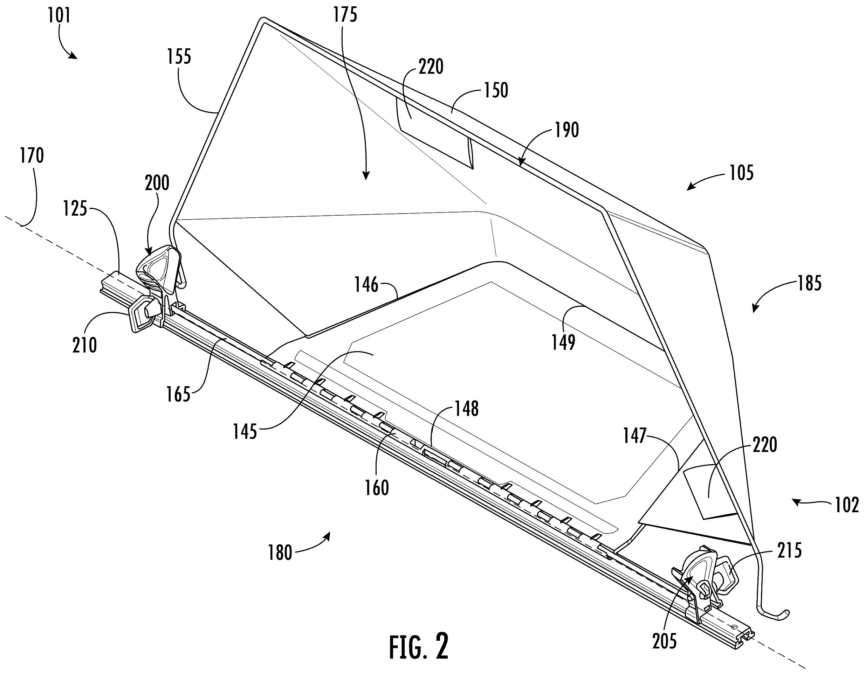

Referring now to the drawings, FIG. 1 illustrates a perspective view of a hedge trimmer 100 and a debris collector 105 in accordance with some embodiments of the present disclosure. FIG. 2 illustrates a perspective view of the debris collector 105 of FIG. 1 in accordance with some embodiments of the present disclosure.

The hedge trimmer 100 generally includes at least one reciprocating cutting implement. For example, the hedge trimmer 100 may include a first reciprocating element, such as a first blade 110, and a second reciprocating element, such as a second blade 115. The first blade 110 and the second blade 115 include "teeth" which, when the implements are reciprocated, cause the blades to cut into material, such as branches of trees, shrubs, and hedges. For example, the first blade 110 may be a first cutting blade including a first plurality of teeth and the second blade 115 may be a second cutting blade including a second plurality of teeth. In other example embodiments, only one of the first blade 110 and the second blade 115 are configured to reciprocate. For example, one of the first blade 110 and the second blade 115 may remain stationary while the other of the first blade 110 and the second blade 115 reciprocates to cause the blades to cut into the material.

The hedge trimmer 100 may further include a housing 120. The first blade 110 and the second blade 115 extend from the housing 120. Moreover, the first blade 110 and the second blade 115 of the hedge trimmer 100 may be coupled to a spine 125 extending from the housing 120 for supporting the first blade 110 and the second blade 115. Additionally, the hedge trimmer 100 includes a first handle 135 and a second handle 140 for gripping by an operator of the hedge trimmer 100.

The hedge trimmer 100 also includes a motive device (not shown), such as an electric motor or gas powered engine, which drives reciprocation of the first blade 110 and/or the second blade 115. The motive device may be powered, for example, by a rechargeable energy source such as a battery, a fuel source such as gasoline, or the like.

The debris collector 105 is removably coupled to the spine 125 of the hedge trimmer 100 such that it typically does not reciprocate with the blade(s). The debris collector 105 extends along a longitudinal axis 170 parallel to the spine 125 between a first end 101 and a second end 102. The debris collector includes a base 145, a collection bag 150, and a wire frame 155. The base 145 includes a first perimeter side 146 adjacent the first end 101, a second perimeter side 147 opposite the first perimeter side 146 adjacent the second end 102, a third perimeter side 148 extending between the first perimeter side 146 and the second perimeter side 147, and a fourth perimeter side 149 extending between the first perimeter side 146 and the second perimeter side 147 opposite the third perimeter side 148.

Moreover, an end of the base 145 at least partially defines a tubular channel 160 for receiving a rod 165 extending along the longitudinal axis 170. For example, the third perimeter side 148 of the base 145 at least partially defines the tubular channel 160. At least a portion of the tubular channel 160 protrudes or extends past a surface of the base 145 in a direction perpendicular to the longitudinal axis 170 on the third perimeter side 148. Moreover, when the debris collector 105 is coupled to the spine 125 of the hedge trimmer, as will be discussed in greater detail below, the base 145 and the collection bag 150 are pivotable about the rod 165 via the tubular channel 160.

As shown in FIG. 2, the tubular channel 160 extends along a length of the third perimeter side 148 in some example embodiments. In additional example embodiments, the tubular channel 160 may include two or more discrete channel portions extending along a portion of the third perimeter side 148. For example, as shown in FIG. 1, the two or more discrete channel portions of the tubular channel 160 may be spaced apart along the rod 165.

In at least one example embodiment, the tubular channel 160 is coupled to the third perimeter side 148 of the base 145.

The collection bag 150 is coupled to a perimeter of the base 145. For example, the collection bag 150 is coupled to and extends from at least a portion of the first perimeter side 146, the second perimeter side 147, and the fourth perimeter side 149 such that the collection bag 150 and the base 145 define a receptacle 175. Accordingly, sides of the collection bag 150 protrude or extend past the surface of the base 145 on the first perimeter side 146, the second perimeter side 147, and the fourth perimeter side 149. The receptacle 175 is configured to receive cut plant material during operation of the hedge trimmer 100. Additionally, the collection bag 150 and the base 145 extend between a front end 180 and a rear end 185 opposite the front end 180. The front end 180 of the collection bag 150 defines an opening 190 to the receptacle 175. Moreover, the wire frame 155 is coupled to the front end 180 of collection bag 150 about the opening 190. For example, as shown in FIG. 1, the collection bag 150 may define one or more slots 195 about the opening 190 configured to receive at least a portion of the wire frame 155. In at least one example embodiment, the collection bag 150 is formed substantially or entirely of a fabric or other flexible material.

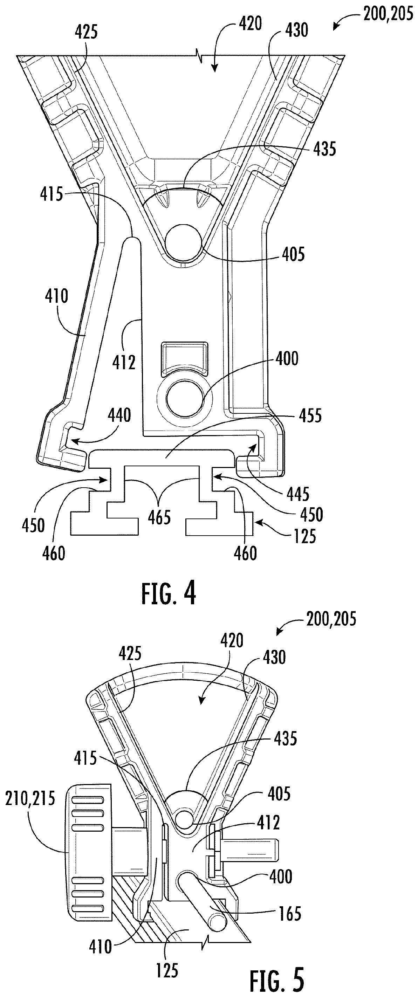

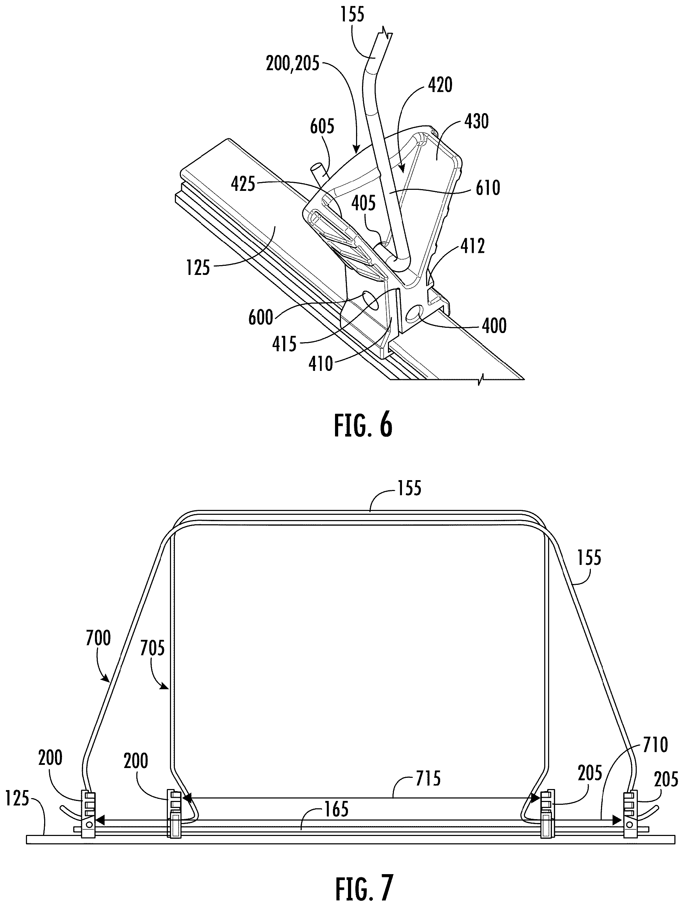

Still referring to FIGS. 1-2, the debris collector 105 includes a first clamp 200 and a second clamp 205 spaced apart from the first clamp 200 along the longitudinal axis 170. The first clamp 200 and the second clamp 205 are removably coupled to the spine 125 of the hedge trimmer 100 using a first fastener 210 and a second fastener 215, respectively, as will be discussed in greater detail with respect to FIGS. 4-5. The first clamp 200 and the second clamp 205 are configured to receive opposing ends of the rod 165 such that the debris collector 105 is removably couplable to the spine 125 via the first clamp 200 and the second clamp 205, as will be discussed with respect to FIG. 5. The first clamp 200 and the second clamp 205 are also configured to receive opposing ends of the wire frame 155, as will be discussed with respect to FIG. 6. In at least one example embodiment, the first clamp 200 and the second clamp 205 comprise a plastic or other rigid or semi-rigid material.

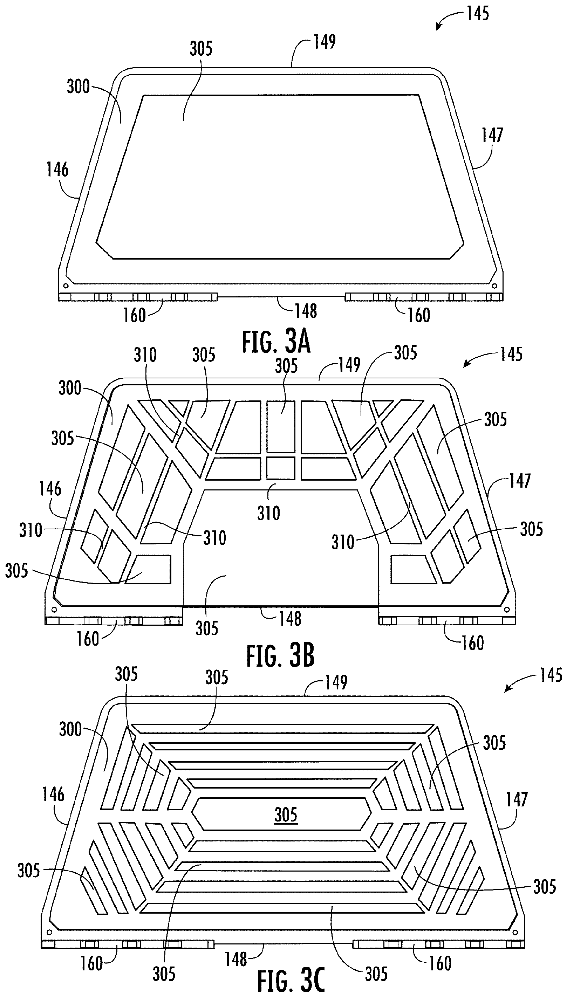

FIGS. 3A-3C illustrates a plan view of the base 145 of the debris collector 105 of FIGS. 1-2 in accordance with some embodiments of the present disclosure.

The base 145 of the debris collector 105 is at least partially formed of a fabric or other flexible material. For example, the base 145 includes one or more solid (e.g., rigid or semi-rigid) material sections 300 and one or more fabric material sections 305. Moreover, the one or more fabric material sections 305 may be disposed between the one or more solid material sections 300 such that the one or more fabric material sections 305 are supported by the one or more solid material sections 300.

As shown in FIG. 3A, the one or more solid material sections 300 are disposed about a perimeter of the base 145, such as about the first perimeter side 146, the second perimeter side 147, the third perimeter side 148, and the fourth perimeter side 149. Additionally, the one or more fabric material sections 305 may include a single fabric section disposed in a center portion of the base 145 within the one or more solid material sections 300 such that, e.g., the fabric material section 305 is bound by the solid material sections 300.

With reference to FIG. 3B, the one or more solid material sections 300 are at least partially disposed about the perimeter of the base 145. For example, the one or more solid material sections 300 extend along a length of the first perimeter side 146, the second perimeter side 147, and the fourth perimeter side 149 with the one or more solid material sections 300 extending partially along a length of the third perimeter side 148.

With reference to FIGS. 3B-3C, the one or more solid material sections 300 may define a plurality of openings for receiving the one or more fabric material sections 305. Moreover, the one or more solid material sections 300 may include a plurality of ribs 310 at least partially defining the plurality of openings and extending between the one or more fabric material sections 305. As shown in FIGS. 3A-3C, the one or more solid material sections 300 and the one or more fabric material sections 305 may define a triangular, rectangular, trapezoidal, or any other polygonal shape. In other example embodiments, the one or more solid material sections 300 and the one or more fabric material sections 305 may define a non-polygonal (e.g., round or ovular) shape.

In some embodiments, the combination of one or more fabric or other flexible material sections 305 and solid material sections 300 may provide sufficient rigidity and weight to support debris (e.g., cut plant material) and permit rotation of base 145 about rod 165 while providing sufficient flexibility to not easily break or crack when stressed by the weight of supported debris or other impacts (e.g., against plants or other structures).

FIG. 4-5 illustrate a side view of the first clamp 200 and the second clamp 205 of the of the debris collector 105 of FIGS. 1-2 in accordance with some embodiments of the present disclosure. FIG. 6 illustrates a perspective view of the first clamp 200 and the second clamp 205 of FIG. 4 in accordance with some embodiments of the present disclosure.

The first clamp 200 and the second clamp 205 (which may be mirror images of one another) define a first opening 400 for receiving at least a portion of the rod 165 (shown in FIG. 5) and a second opening 405 for receiving at least a portion of the wire frame 155 (shown in FIG. 6). The first opening 400 is configured to be positioned adjacent the spine 125 and the second opening 405 is spaced apart from the first opening 400 in a radial direction extending perpendicular to the longitudinal axis 170 (FIGS. 1-2).

With reference to FIGS. 4-5, the first clamp 200 and the second clamp 205 include a leg 410 pivotable between an unlocked position (shown in FIG. 4) and a locked position (shown in FIG. 5) relative to a base 412 of the first clamp 200 and the second clamp 205. The leg 410 is pivotable about a pivot point 415. In at least one example embodiment, the leg 410 is integral with the first clamp 200 and the second clamp 205 such that the pivot point 415 includes a living hinge. In other example embodiments, the leg 410 may be a separate, discrete member coupled to the pivot point 415 of the first clamp 200 and the second clamp 205 by a hinge.

The first clamp 200 and the second clamp 205 are removable from the spine 125 of the hedge trimmer 100 in the unlocked position and secured to the spine 125 of the hedge trimmer 100 in the locked position. Moreover, the first clamp 200 and the second clamp 205 are secured in the locked position by the first fastener 210 and the second fastener 215, respectively. For example, as shown in FIG. 6, the first clamp 200 and the second clamp 205 define a fastener opening 600 extending through the leg 410 and the base 412 perpendicular to the first opening 400 and the second opening 405 for receiving the first fastener 210 and the second fastener 215. The first fastener 210 and the second fastener 215 may include a screw, a pin, a bolt, or any other suitable fastener.

As shown in FIG. 4, an end of the leg 410 opposite the pivot point 415 defines a leg recess 440 for engaging at least a portion of the spine 125 of the hedge trimmer 100 in the locked position. Moreover, an end of the base 412 of the first clamp 200 and the second clamp 205 defines a base recess 445 opposite the leg recess 440 for engaging an opposing portion of the spine 125. For example, the spine 125 defines opposing spine recesses 450 between a first spine wall 455, a second spine wall 460, and a spine support wall 465 extending perpendicularly between the first spine wall 455 and the second spine wall 460. Accordingly, the leg recess 440 and the base recess 445 are configured to receive opposing ends of the first spine wall 455 in the locked position.

Still referring to FIGS. 4-6, each of the first clamp 200 and the second clamp 205 define an angular slot 420 defined between a first end wall 425 and a second end wall 430. As shown in FIGS. 4-5, an angle 435 is defined between the first end wall 425 and the second end wall 430. The angle 435 may be less than 90 degrees. For example, the angle 435 may be less than or equal to 60 degrees. For example, the angle 435 may be about or exactly 55 degrees.

As shown in FIG. 6, the angular slot 420 of the first clamp 200 and the second clamp 205 receive an end portion of the wire frame 155. For example, a first end portion 605 of the wire frame 155 extends through the second opening 405 and a second end portion 610 of the wire frame 155 extending from the first end portion 605 is disposed in the angular slot 420. The first end portion 605 defines opposing ends of the wire frame 155 and may be bent or angled away from the direction of longitudinal axis 170 to help prevent first end portion 605 from being inadvertently removed from second opening 405. The second end portion 610 extends at an angle relative to the first end portion 605. Moreover, the wire frame 155 is pivotable about the second opening 405 of the first clamp 200 and the second clamp 205 between the first end wall 425 and the second end wall 430 (e.g., the first end wall 425 and second end wall 430 each stop movement of wire frame 155 and together define the maximum travel distance of wire frame 155 within angular slot 420). Accordingly, as the first end portion 605 of the wire frame 155 pivots about the second opening 405 of the first clamp 200 and the second clamp 205 (e.g., due to a user rotating the first handle 135 about longitudinal axis 170), such that the second end portion 610 pivots between the first end wall 425 and the second end wall 430 of the angular slot 420, the opening 190 of the collection bag 150 pivots about the longitudinal axis 170 (FIGS. 1-2).

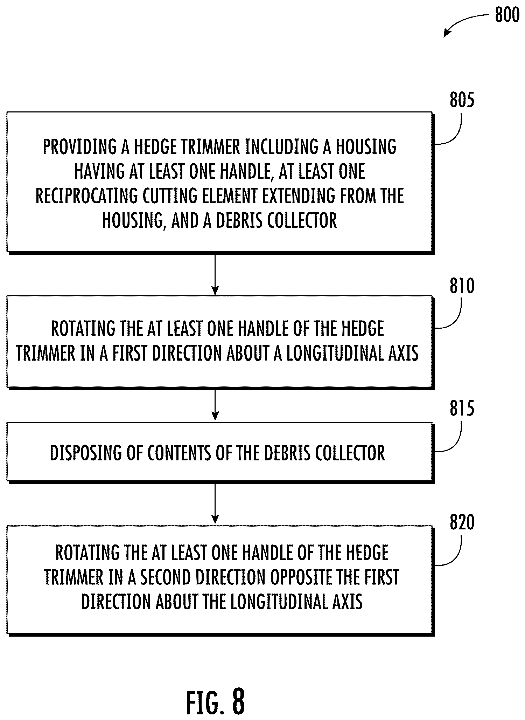

FIG. 8 illustrates a method 800 for operating the hedge trimmer 100 and the debris collector 104 of FIG. 1 in accordance with some embodiments of the present disclosure.

In at least one example embodiment, the method 800 includes providing a hedge trimmer including a housing having at least one handle, at least one reciprocating cutting element extending from the housing, and a debris collector at 805, rotating the at least one handle of the hedge trimmer in a first direction about a longitudinal axis at 810, disposing of contents of the debris collector at 815, and rotating the at least one handle of the hedge trimmer in a second direction opposite the first direction about the longitudinal axis at 820.

Providing a hedge trimmer including a housing having at least one handle, at least one reciprocating cutting element extending from the housing, and a debris collector at 805 includes providing the hedge trimmer 100 and the debris collector 105 described with respect to FIGS. 1-7.

Rotating the at least one handle of the hedge trimmer in a first direction about a longitudinal axis at 810 includes rotating one or both of the first handle 135 and the second handle 140 in a first direction about the longitudinal axis 170. In some example embodiments, a user may rotate the first handle 135 about the longitudinal axis 170 to a sufficient degree that the center of gravity of the base 145 falls on the opposite side of the spine 125. In such embodiments, the base 145 rotates about spine 125, carrying with it the collection bag 150 such that the opening 190 is oriented in an opposite direction (i.e., the inside of collection bag 150 becomes the outside). Accordingly, disposing of contents of the debris collector at 815 includes expelling the contents of the collection bag 150 (e.g., cut plant material) from collection bag 150 (e.g., into a disposal location or receptacle). Moreover, the rotating at 810 may include rotating the wire frame 155 within angular slot 420 during this process to stably reorient the collection bag 150 and the base 145 into the opposite orientation even when spine 125 is returned to an orientation substantially level to the ground (e.g., as shown in FIGS. 1-2 but with collection bag 150 and base 145 in an opposite configuration)

Rotating the at least one handle of the hedge trimmer in a second direction opposite the first direction about the longitudinal axis at 820 includes rotating one or both of the first handle 135 and the second handle 140 in a second direction opposite the first direction about the longitudinal axis 170. In such embodiments, the hedge trimmer 100 and the debris collector 105 are returned to their initial, starting position and the method 800 may return to step 805. Moreover, the rotating at 820 may be similar or analogous to the rotating at 810 in an opposite direction.

FIG. 7 illustrates a front view of the wire frame 155 of the debris collector 105 of FIGS. 1-2 in a first position and a second position in accordance with some embodiments of the present disclosure. More specifically, FIG. 7 illustrates the wire frame 155, the first clamp 200, and the second clamp 205 in the first position and the second position relative to the rod 165 and the spine 125.

As shown in FIG. 7, the first clamp 200 and the second clamp 205 are moveable, such as slidable, along the rod 165 and the spine 125. For example, the first clamp 200 and the second clamp 205 are moveable between a first position 700 and a second position 705. In the first position, the first clamp 200 and the second clamp 205 are spaced along the rod 165 a first distance 710. In the second position, the first clamp 200 and the second clamp 205 are spaced along the rod 165 a second distance 715. The first distance 710 is greater than the second distance 715.

As the first clamp 200 and the second clamp 205 are moved along the rod 165 and the spine 125, opposing ends of the wire frame 155 are also moved. More specifically, the wire frame 155 and the collection bag 150 are deformable between the first position 700 and the second position 705 in response to movement of the first clamp 200 and the second clamp 205. For example, the wire frame 155 and the collection bag 150 are deformable in a first direction parallel to the longitudinal axis 170 such that a width of the opening 190 of the collection bag 150 is larger in the first position 700 than in the second position 705. Additionally, the wire frame 155 and the collection bag 150 are deformable in a second direction perpendicular to the longitudinal axis 170 such that a height of the opening 190 of the collection bag 150 is greater in the second position 705 than in the first position 700. With reference to FIG. 2, one or more tabs 220 may be coupled to the front end 180 of the collection bag 150, such as adjacent the opening 190, for manipulating the size of the opening 190 and/or aiding in movement of the first clamp 200 and the second clamp 205 along the rod 165.

Accordingly, the present disclosure provides a removable debris collector for a hedge trimmer. The debris collector includes a base and a collection bag coupled to the base. The base is formed of both solid materials and fabric materials. The collection bag is formed of fabric materials. The base is pivotable along a longitudinal axis of the hedge trimmer, which aids in emptying of the collection bag. A wire frame is disposed about an opening of the collection bag for adjusting a height and/or a width of the collection bag. For example, opposing ends of the wire frame are coupled to a first clamp and a second clamp. The first clamp and the second clamp may be moved towards each other or away from each other, which also moves the opposing ends of the wire frame towards and away from each other, for adjusting the height and/or width of the collection bag. Moreover, the opposing ends of the wire frame are pivotable within an angular slot disposed in the first clamp and the second clamp, which also aids in emptying of the collection bag.

Further aspects of the disclosure are provided by one or more of the following example embodiments:
A debris collector for a hedge trimmer, the debris collector comprising: a base at least partially formed of a fabric material; a tubular channel coupled to an end of the base for receiving a rod extending along a longitudinal axis, wherein the base is pivotable about the rod; a collection bag coupled to the base and defining a receptacle having an opening; a wire frame at least partially disposed about the opening of the collection bag; a first clamp; and a second clamp spaced from the first clamp along the longitudinal axis; wherein the first clamp and the second clamp define: a first opening for receiving at least a portion of the rod, a second opening for receiving at least a portion of the wire frame, and an angular slot defined between a first end wall and a second end wall for receiving another portion of the wire frame, wherein the wire frame is pivotable about the second opening between the first end wall and the second end wall of the angular slot.

The debris collector of any one or more of the embodiments, wherein at least a portion of the tubular channel protrudes past a surface of the base in a direction perpendicular to the longitudinal axis.

The debris collector of any one or more of the embodiments, wherein each end of the wire frame comprises a first end portion disposed in the second opening of the first clamp and the second clamp, respectively, and a second end portion extending from the first end portion disposed in the angular slot of the first clamp and the second clamp, respectively.

The debris collector of any one or more of the embodiments, wherein an angle is defined between the first end wall and the second end wall of the angular slot.

The debris collector of any one or more of the embodiments, wherein the angle is less than 90 degrees.

The debris collector of any one or more of the embodiments, wherein the angle is less than or equal to 60 degrees.

The debris collector of any one or more of the embodiments, wherein the angle is 55 degrees.

The debris collector of any one or more of the embodiments, wherein the first clamp and the second clamp comprise a leg pivotable relative to a base of the first clamp and the second clamp between a locked position and an unlocked position, wherein the first clamp and the second clamp are secured to the hedge trimmer in the locked position and removable from the hedge trimmer in the unlocked position.

The debris collector of any one or more of the embodiments, wherein: the first clamp and the second clamp define a fastener opening extending through the leg and the base perpendicular to the first opening and the second opening; and the debris collector further comprises: a first fastener for inserting through the fastener opening of the first clamp and securing the first clamp in the locked position, and a second fastener for inserting through the fastener opening of the second clamp and securing the leg of the second clamp in the locked position.

The debris collector of any one or more of the embodiments, wherein the first fastener and the second fastener comprise a screw, a pin, or a bolt.

The debris collector of any one or more of the embodiments, wherein the leg of the first clamp is integral with the first clamp and the leg of the second clamp is integral with the second clamp.

The debris collector of any one or more of the embodiments, wherein the first clamp and the second clamp comprise a living hinge coupling the leg to the first clamp and the second clamp.

The debris collector of any one or more of the embodiments, where the leg is pivotably coupled to the first clamp and the second clamp via a hinge.

The debris collector of any one or more of the embodiments, wherein the first clamp and the second clamp are formed of a plastic material.

The debris collector of any one or more of the embodiments, wherein the first clamp and the second clamp are moveable along the rod between a first position and a second position.

The debris collector of any one or more of the embodiments, wherein: the first clamp and the second clamp are spaced along the longitudinal axis a first distance in the first position and a second distance in the second position; and the first distance is greater than the second distance.

The debris collector of any one or more of the embodiments, wherein: the wire frame and the collection bag are deformable between the first position and the second position; and a width of the opening of the collection bag is greater in the first position than in the second position.

The debris collector of any one or more of the embodiments, wherein the collection bag is deformable in a first direction along the longitudinal axis and in a second direction perpendicular to the longitudinal axis.

The debris collector of any one or more of the embodiments, wherein the collection bag is formed of a fabric material.

A hedge trimmer, comprising: a spine extending between a first end and a second end opposite the first end; a first reciprocating element coupled to the spine and extending between the first end and the second end opposite the first end; a second reciprocating element coupled to the spine and extending between the first end and the second end; a motive device for driving one or both of the first reciprocating element and the second reciprocating element; and a debris collector removably coupled to the spine, the debris collector comprising: a base at least partially formed of a fabric material, a tubular channel coupled to an end of the base for receiving a rod extending along a longitudinal axis, wherein the base is pivotable about the rod, a collection bag coupled to the base and defining a receptacle having an opening, a wire frame at least partially disposed about the opening of the collection bag, a first clamp, and a second clamp spaced from the first clamp along the longitudinal axis, wherein the first clamp and the second clamp define: a first opening for receiving at least a portion of the rod, a second opening for receiving at least a portion of the wire frame, and an angular slot defined between a first end wall and a second end wall for receiving another portion of the wire frame, wherein the wire frame is pivotable about the second opening between the first end wall and the second end wall of the angular slot.

A method of operating a hedge trimmer, the method comprising: providing a hedge trimmer extending along a longitudinal axis, the hedge trimmer comprising: a housing comprising at least one handle, a spine extending from the housing between a first end and a second end opposite the first end, at least one reciprocating cutting element coupled to the spine and extending between the first end and the second end, and a debris collector removably coupled to the spine; rotating at least one handle of the hedge trimmer about the longitudinal axis; expelling contents from the debris collector; and rotating the at least one handle of the hedge trimmer in a second direction opposite the first direction about the longitudinal axis.

This written description uses examples to disclose the present application, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

## Claims

1. A debris collector for a hedge trimmer, the debris collector comprising:
a base at least partially formed of a fabric material;
a tubular channel coupled to an end of the base for receiving a rod extending along a longitudinal axis, wherein the base is pivotable about the rod;
a collection bag coupled to the base and defining a receptacle having an opening;
a wire frame at least partially disposed about the opening of the collection bag;
a first clamp; and
a second clamp spaced from the first clamp along the longitudinal axis;
wherein the first clamp and the second clamp define:
a first opening for receiving at least a portion of the rod,
a second opening for receiving at least a portion of the wire frame, and
an angular slot defined between a first end wall and a second end wall for receiving another portion of the wire frame, wherein the wire frame is pivotable about the second opening between the first end wall and the second end wall of the angular slot.

2. The debris collector of claim 1, wherein at least a portion of the tubular channel protrudes past a surface of the base in a direction perpendicular to the longitudinal axis.

3. The debris collector of claim 1 or 2, wherein each end of the wire frame comprises a first end portion disposed in the second opening of the first clamp and the second clamp, respectively, and a second end portion extending from the first end portion disposed in the angular slot of the first clamp and the second clamp, respectively.

4. The debris collector of any of the previous claims, wherein the portion of the rod to be received by the first opening is at least partially angled relative to the longitudinal axis.

5. The debris collector of any of the previous claims, wherein an angle is defined between the first end wall and the second end wall of the angular slot, and wherein the angle is less than 90 degrees.

6. The debris collector of any of the claims 1-4, wherein an angle is defined between the first end wall and the second end wall of the angular slot, and wherein the angle is less than or equal to 60 degrees.

7. The debris collector of any of the claims 1-4, wherein an angle is defined between the first end wall and the second end wall of the angular slot, and wherein the angle is 55 degrees.

8. The debris collector of any of the previous claims, wherein the first clamp comprises a leg pivotable relative to a base of the first clamp between a locked position and an unlocked position, wherein the first clamp is secured to the hedge trimmer in the locked position and removable from the hedge trimmer in the unlocked position.

9. The debris collector of claim 8, wherein:
the first clamp defines a fastener opening extending through the leg and the base perpendicular to the first opening; and
the debris collector further comprises:
a fastener for inserting through the fastener opening of the first clamp and
securing the first clamp in the locked position, wherein the fastener comprises a screw, a pin, or a bolt.

10. The debris collector of claim 8 or 9, wherein the leg of the first clamp is integral with the first clamp, and wherein the first clamp comprises a living hinge coupling the leg to the first clamp.

11. The debris collector of claim 8, 9 or 10, where the leg is pivotably coupled to the first clamp via a hinge.

12. The debris collector of any of the previous claims, wherein the first clamp and the second clamp are formed of a plastic material.

13. The debris collector of any of the previous claims, wherein:
the first clamp is moveable along the rod between a first position and a second position;
the first clamp and the second clamp are spaced along the longitudinal axis a first distance in the first position and a second distance in the second position;
the first distance is greater than the second distance;
the wire frame and the collection bag are deformable between the first position and
the second position; and
a width of the opening of the collection bag is greater in the first position than in the second position.

14. The debris collector of any of the previous claims, wherein the collection bag is deformable in a first direction along the longitudinal axis and in a second direction perpendicular to the longitudinal axis.

15. A hedge trimmer, comprising:
a spine extending between a first end and a second end opposite the first end;
a reciprocating element coupled to the spine and extending between the first end and the second end opposite the first end;
a motive device for driving the reciprocating element; and
a debris collector removably coupled to the spine, the debris collector comprising:
a base at least partially formed of a fabric material,
a tubular channel coupled to an end of the base for receiving a rod extending along a longitudinal axis, wherein the base is pivotable about the rod,
a collection bag coupled to the base and defining a receptacle having an opening,
a wire frame at least partially disposed about the opening of the collection bag,
a first clamp, and
a second clamp spaced from the first clamp along the longitudinal axis,
wherein the first clamp and the second clamp define:
a first opening for receiving at least a portion of the rod,
a second opening for receiving at least a portion of the wire frame, and
an angular slot defined between a first end wall and a second end wall for receiving another portion of the wire frame, wherein the wire frame is pivotable about the second opening between the first end wall and the second end wall of the angular slot.
